# EUROPEAN PATENT APPLICATION

(11) **EP 2 865 724 A1**
(43) Date of publication of application: **29.04.2015**
(21) Application number: 13190403.9
(22) Date of filing: 27.10.2013
(51) Int. Cl.: C09D 175/04, C08G 18/32, C08G 18/36, C23C 22/00

(54) **Method for producing spray-applied polyurethane coatings on metal constructions**

(71) Applicant: "Latvian State Institute of Wood Chemistry" Derived public person, 1006 Riga (LV)
(72) Inventor: Stirna, Uldis, LV- 1082 Riga (LV); Misane, Marija, LV-1079 Riga (LV); Fridrihsone-Girone, Anda, LV-3931 Riga (LV); Cabulis, Ugis, LV-1084 Riga (LV); Gaidukovs, Sergejs, LV-1084 Riga (LV); Tupureina, Velta, LV-1064 Riga (LV)
(74) Representative: Dolgicere, Nina

(57) **Abstract**

Disclosed is a method for producing spray applied polyurethane coatings on metal constructions. The polyurethane coating is obtained by mixing isocyanate component with polyol component wherein the polyol component contains catalytically active vegetable oil polyol that is synthesized by transesterification of vegetable oil with triethanolamine at molar ratio 1.0:2.0 to 3.0. Moreover the polyol component also comprises chain extender, thixotropic agent, molecular sieves, antifoaming agent and nanoparticles. The volume ratio of isocyanate and polyol component is 1.0 to 1.0.

The method provides the production of smooth polyurethane coatings on metal constructions in upright position, and on the inside walls of potable water tanks.

## Description

### Technical Field

The present invention relates generally to a method of polyurethane spray coating technology for metal constructions, including surfaces of potable water tanks in upright position.

### Background Art

A significant technical problem is the storage of potable water in large tanks. It is necessary to coat the inside of these potable water tanks with protective coatings to protect the potable water from corrosion products entering the water. These protective coatings do not allow leaching harmful chemical compounds, which are not allowed to enter potable water from coating.

It is known that enamels are used for coating of small tanks or reactors that are used for carrying out chemical processes. The inside coating with enamel of large tanks (capacity of several thousand cubic meters) that are used for potable water storage can be very difficult from technical point of view. For this purpose polymer type of coatings are suitable because they do not leach catalysts, plasticizers or other harmful compounds when contacted with water. Polyurea coatings are often used for this purpose. Polyurea is produced in reaction of polyetheramines with isocyanate component but they are more expensive than polyurethane coatings and these coatings have high water absorption [Guan, SW, "100% solids polyurethane and polyurea coatings technology." Coatings Word, March 2003, pp.49-58.]. The most advanced solution is to use two component (2K) polyurethane systems that do not comprise volatile organic compounds (VOCs).

To produce VOCs free polyurethane coatings that might be applied on surfaces in upright position, low viscosity, thixotropic and fast curing formulations are necessary. Polyoxypropylene type polyols are not suitable for fast curing polyurethane formulations because they comprise less active secondary hydroxyl groups [Ionescu M. Chemistry and technology of polyols for polyurethanes. Rapra Technology Limited, UK, 2005, Chapter 21, p.535.]. If such polyols are used for production of spray-applied polyurethane coatings, it is necessary to use end cure catalysts, for example, dibuthyltindilaurate.

Spraying of polyurethane coatings from low viscosity systems on surfaces in upright position is a difficult process because a freshly spray-applied mixture may flow or drip. In order to prevent the dripping of the coating a rapid increase in viscosity of the sprayed mixture is required during the initial stage of curing.

For spray applied coatings on the surfaces in upright position, it is not desired to use pre-thickened systems where thickening agents have been introduced in polyol component.

This method involves undesired increase in viscosity for polyol component which decreases the quality of spray applied coating. Many inventions in this field are related to the use of amine with aliphatic or aromatic structure in polyol component. In this case the thixotropic effect is achieved by the rapid reaction of amine component with isocyanate component. This method is mainly used for production of urea and elastomeric polyurethane coatings. The main disadvantage of the abovementioned method is the presence of aliphatic and aromatic amines which react with isocyanate component and provide the rapid curing in the initial stage but these thixotropic agents fail to fulfill the end cure catalyst function. Sufficiently rapid end curing of rigid polyurethane coatings can be obtained if tin, bismuth or mercury organometallic catalysts are used. Dibuthyltindilaurate is the most common catalysts for polyurethane coating compositions. This catalyst is very effective but the use thereof involves the following problems: the change in activity during polyol storage, hydrolysis of ester groups and environmental concerns. The use of such catalysts is not desirable and they should not be used in cases if coatings are used for the protection of inside walls of potable water tanks.

Patent US 8062710 B2 discloses a method for polyurethane coating production where coating is the reaction product of vegetable oil polyols and chain extenders with isocyanate component. Vegetable oil polyols are synthesized using transesterification of vegetable oils with mixture of glycerol and sorbitol. Since synthesized vegetable oil polyols mainly comprise secondary hydroxyl groups these polyols are not very active in reaction with isocyanate component and for the purpose of avoiding said disadvantage the organometallic catalysts or volatile tertiary amines are introduced in compositions.

The use of previously mentioned catalysts for polyurethane coating production excludes the possibility of using the polyurethane coatings described in Patent US 8062710 B2 for coatings for inside walls of potable water tanks.

EP21080958 discloses the method for preparing polyurethane coatings by spraying solventless isocyanate and polyol components that can be used for protection of steel or any other metal.

According to the method disclosed in EP21080958, for making VOCs free polyurethane coatings, polyol components of following composition are used:

- m-xylylendiamine/butilglycidyl-ether copolymer;
- pigment - titanium dioxide;
- thixotropic agent - fumed silica;
- defoaming additive;
- catalysts - tin, zinc, potassium or titanium organic compounds or tertiary amines.

### Summary of invention

A method for producing spray applied polyurethane coatings on metal constructions meets the above requirements due to mixing isocyanate and polyol components, whereby firstly catalytically active vegetable oil polyol is synthesized, which is then mixed with chain extender, thixotropic agent, molecular sieves, antifoaming agent and nanoparticles. The volume ratio of polyol and isocyanate component is 1.0 to 1.0, furthermore, catalytically active vegetable oil polyol is synthesized from vegetable oil and triethanolamine with molar ratios of vegetable oil and triethanolamine is 1.0 : 2.0 to 3.0 with following parameters:
- higher fatty acid C14-C22 triethanolamine esters and higher fatty acid monoglycerides in the range of 82 to 90 percentage by mass;
- higher fatty acid C14-C22 diglycerides in the range of 2 to 10 percentage by mass;
- glycerol in the range of 1 to 9 percentage by mass;
- pH of polyol/water solution is in the range of 8.2 to 9.2

According to the present invention suitable chain extenders are glycols comprising primary hydroxyl groups and with molecular weight in the range of 62 to 150; they are selected from the following ones: ethylene glycol, 1,4-butylene glycol, 1,3-propylene glycol, diethylene glycol, triethylene glycol, whereas as thixotropic agents N-substituted diethanolamines are used: N-Methyldiethanolaimne, N-Ethyldiethanolamine, N-Phenyldiethanolamine, N-Buthyldiethanolamine.

Zinc oxide is utilized as nanoparticles, and polysiloxanes are utilized as antifoaming agents.

Preferably as a isocyanate component polymeric 4,4'-methylene diphenyldiisocyanate (MDI) with isocyanate group content in the range of 30 to 33% and functionality in the range of 2.1-3.0 should be used.

Catalytically active vegetable oil polyol is synthesized using transesterification of vegetable oil with triethanolamine wherein the molar ratio of vegetable oil to triethamolamine is 1.0: 2.0 to 1.0:3.0 and more particularly 1.0: 2.2 to 2.9.

Suitable vegetable oils for transesterification are following: rapeseed, sunflower, soybean or olive oil. The synthesis is carried out at 150-180 °C, preferably at 160-170 °C.

According to the present invention as transesterification catalyst zinc acetate is to be used in the range of 0.2 to 0.4 wt.% of total weight of vegetable oil and triethanolamine.

The process of synthesis meets the green chemistry requirements because no byproducts or harmful emissions are formed. According to the present invention the final product of disclosed synthesis is the mixture of triethanolamine esters of higher saturated and unsaturated fatty acids present in vegetable oils, monoglyceride and diglyceride type esters and glycerol.

The average functionality of polyols synthesized from vegetable oils is in the range of 2.0 to 2.3. The preconditions of synthesis allow synthesizing polyols with hydroxyl value in the range of 290 to 380 mg KOH/g. Polyols described in this invention have pH value in the range of 8.2 to 9.2 which ensures high catalytic activity of these polyols in reaction with isocyanate component.

### Technical Problem

Isocyanates having an aliphatic or aromatic structure and functionality higher than 2 are used as isocyanate component. The polyols disclosed in EP 2180958 are not synthesized from renewable resources but from epoxy compounds that have reacted with primary amines. These polyols are not catalytically active and comprise less active secondary hydroxyl groups which lead to their insufficiently rapid reaction with isocyanate component. For that reason catalysts are used for spray applied coating production and hence the resulting coatings do not meet the criteria for green chemistry. Coatings are produced using spray application technique and they are also offered to be used as coatings for inside walls of potable water tanks. Taking into account that coatings were produced using organometallic catalysts, their use for coating of inside walls of potable water tanks is a problematic one. Furthermore, a thickening agent was used to reach thixotropic effect in compositions, but that increases the viscosity of composition and in this manner decreases the quality of spray applied coating.

### Solution to Problem

This invention describes a method for producing spray applied polyurethane coatings on the surfaces in upright position, also providing a possible application domain as coating for inside walls of potable water tanks.

### Effect of the invention

This invention describes a method for producing spray applied polyurethane coatings on the surfaces in upright position, also providing a possible application domain as coating for inside walls of potable water tanks.

### Description of embodiments

Polyols synthesized from vegetable oils mainly consists of triethanolamine esters of higher fatty acid radicals C14-C22 (1) and monoglycerides (2) with following structures:

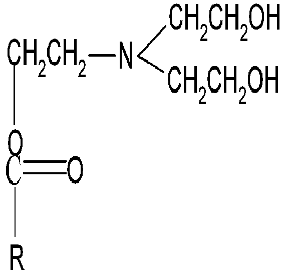

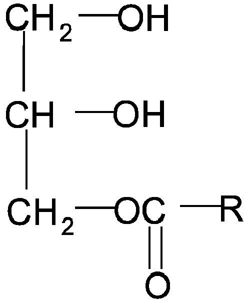

where R represents higher fatty acid radicals C14-C22

When using polyols disclosed in this invention long C14-C22 dangling chains are introduced into chemical structure of polyurethane coating. This feature increases the hydrophobicity and hydrolytic resistance of the polyurethane coating.

The viscosity of polyols disclosed herein is lower than 200 mPa·s at 25 °C that is important because it facilitates the production of coatings with smooth surface and without gas bubble inclusions.

To carry out the method according to the present invention and to meet the condition that volume ratio of component A and B is 1.0 : 1.0, different chain extenders containing primary hydroxyl groups can be used, for example ethylene glycol, 1,4-butylene glycol, 1,3-propylene glycol, diethylene glycol, triethylene glycol with molecular weight in the range of 62 to 150 and hydroxyl value in the range of 750 to 905 mg KOH/g.

As thixotropic agents the following N-substituted diethanolamines can be used: N-Methyldiethanolaimne, N-Ethyldiethanolamine, N-Phenyldiethanolamine and N-Buthyldiethanolamine.

The results obtained regarding gel formation activity of rapeseed oil polyol, chain extender - triethylene glycol and other chain extenders and thixotropic agent N-Methyldiethanolamine in reaction with polymeric MDI at adiabatic conditions are presented in Table 1.

These results indicate that gel formation activity of rapeseed oil triethanolamine polyol and thixotropic agent N-Methyldiethanolamine in comparison to gel formation activity of triethylene glycol is 40 times and 180 times higher, respectively.

To achieve the objects of this invention, it is preferable not to use glycols comprising secondary hydroxyl groups, for example, dipropylene glycol, gel formation time of which in reaction with polymeric MDI is long, namely, 2200 s.

Table 1 Characteristics of polyurethane gel formation activity under adiabatic conditions

**Table 1**

| **Polyols and chain extender** | **OH value (mg KOH/g)** | **Gel time (s)** |
|---|---|---|
| Rapeseed oil triethanolamine polyol | 374 | 22 |
| Triethylene glycol | 748 | 900 |
| N-Methyldiethanolamine | 943 | 5 |
| Diethylene glycol | 1067 | 820 |
| Rapeseed oil diethanolamide | 420 | 165 |
| Dipropylene glycol | 837 | 2200 |

To prevent the formation of gas bubbles in spray applied coatings, different anti-foaming agents or defoamers can be used, for example, Defoamer BYC-320.

Polymeric diphenylmethane diisocyanate with NCO group content in the range of 30 to 33% and average functionality from 2.1 to 3.0 can be used as isocyanate component.

To use the compositions disclosed in this invention for spray applied coating production, the isocyanate index (equivalent NCO/equivalent OH) must be in the range of 0.95 to 1.3 more preferably in the range of 1.05 to 1.2.

The porosity of coating significantly increases if higher isocyanate index is used because excess isocyanate can react with moisture in the air, forming carbon dioxide bubbles in the coating.

According to the present invention as thixotropic agents N-substituted diethanolamines are used, which manifest their catalytic activity during the first seconds of polymerization process, followed by rapid increase in viscosity of spray applied mixture. Whereas, the catalytically active polyols that are synthesized by using transesterification reaction of vegetable oil with triethanolamine manifest their catalytic activity in the final stages of curing.

In general, it allows obtaining thixotropic systems for fast curing (gel time 15 - 40 s, tack free time 25 - 120 s), spray applied coating, which can be applied on both the surfaces in upright position and on ceilings.

### Examples

### Example 1 - Synthesis of catalytically active polyol

Rapeseed oil esters were synthesized by transesterification using triethanolamine. 440 g of rapeseed oil (0.5 mol) was weighed out and heated to 170 ± 5 °C, then 0.15 wt.% zinc acetate as a catalyst was added with stirring, and preheated (to 70 °C) triethanolamine in the amount of 216 g (1.45 mol) was added during the next 15 min. The reaction of transesterification was carried out for 2 h. The end of the reaction was tested by the solubility of the obtained product in ethanol at the volume ratio resin : ethanol = 1:1. Rapeseed oil and triethanolamine polyols at different molar ratios were prepared as described. Characteristics of rapeseed oil triethanolamine esters, which were used for polyol component production, are presented in Table 2.

**Table 2** Characteristics of the synthesized rapeseed oil polyols

**Table 2**

| **Polyol code** | **molar ratio, rapeseed oil / triethanolamine** | **Polyols' OH value (mg KOH/g)** | **Viscosity (mPa·s at 25 °C)** | **Average functionality, *fn*** | **pH value** |
|---|---|---|---|---|---|
| 1 | 1:2.2 | 302 | 137 | 2.06 | 8.34 |
| 2 | 1:2.5 | 325 | 148 | 2.12 | 8.69 |
| 3 | 1:2.9 | 374 | 156 | 2.25 | 8.94 |

### Example 2 - Preparation of polyol component

To 7.59 kg of polyol 3 (Table 2) 0.95 kg of chain extender triethylene glycol, 0.95 kg of thixotropic agent N-methyldiethanolamine, 0.47 kg of molecular sieves Albolit MS C-350 and 0.04 kg of defoamer BYC-320 were added. A mixture was homogenized. After allowing it to hold at a room temperature for at least 24 hours; it can be used for production of spray applied coating.

Prepared polyol component A3 has low viscosity - 137 mPa·s at 25 °C, hydroxyl value - 467 mg KOH/g.

Similarly, other polyol components were prepared as described above. The compositions of polyol components described in the present invention are presented in Table 3.

**Table 3** The compositions of polyol components used for producing polyurethane coating by spray application method

**Table 3**

| **Polyurethane formulation** | **A1** | **A2** | **A3** | **A4** | **A5** |
|---|---|---|---|---|---|
| **Polyol component, wt. %** | | | | | |
| Rapeseed oil triethanolamine ester 1 | 77.6 | - | | | |
| Rapeseed oil triethanolamine ester 2 | - | 71.2 | | | |
| Rapeseed oil triethanolamine ester 3 | | | 75.8 | 77.4 | 77.4 |
| Diethylene glycol | 14.7 | - | - | - | - |
| Triethlene glycol | - | 15.2 | 9.5 | 9.7 | 9.7 |
| N-methyldiethanolamine | 4.8 | 8.5 | 9.5 | 9.7 | 9.7 |
| Molecular sieves ALBOLITH MS C-350 | 2.9 | 4.7 | 4.5 | 2.9 | 2.7 |
| Defoamer BYC-320 | - | 0.4 | 0.4 | 0.3 | 0.4 |
| Zinc oxide ZANO | - | - | 0.3 | - | 0.1 |

| **Isocyanate component in parts by weight calculated on 100 parts by weight of polyol component** | | | | | |
|---|---|---|---|---|---|
| Suprasec 2651, NCO=31.7%, fₙ=2.3 | - | - | - | 122 | 122 |
| Voratec SD 100, NCO=31.5%, fₙ =2.7 | 123 | 123 | 122 | - | - |

### Example 3 - Spraying of polyurethane coating

One of polyol components as described in Table 3 is filled into a polyol tank of high pressure spraying equipment Graco Reactor-10. Whereas the isocyanate tank is filled in with polymeric MDI, for example, Voratec SD 100 with NCO group content of 31.5%, functionality fₙ= 2.7 or polymeric MDI Suprasec 2651 with NCO=31.7 %, fₙ=2.3.

Technological parameters of polyurethane coating spraying are summarized in Table 4.

**Table 4** Technological parameters of polyurethane coating spraying. Experiments were carried out at 20-23 °C, relative humidity of air 50-60%

**Table 4**

| **Technological parameters** | **PU-1** | **PU-2** | **PU-3** | **PU-4** | **PU-5** |
|---|---|---|---|---|---|
| Viscosity of component A, mPa·s at 25 °C | 128 | 135 | 137 | 137 | 140 |
| Viscosity of component B, mPa·s at 25°C | 200 | 200 | 200 | 30 | 30 |
| Temperature of component A and B, °C | 40-50 | 40-50 | 40-50 | 40-50 | 40-50 |
| Pressure of component A and B in heated hoses, bar | 130-150 | 130-150 | 130-150 | 130-150 | 130-150 |
| Gel time, s (on 2 mm thick metal sheet) | 15-20 | 20-30 | 20-25 | 35-40 | 35-40 |
| Tack free time, s | 25-30 | 40-50 | 30-50 | 100-120 | 100-120 |

The coating is sprayed on the surface of 2 mm thick, degreased metal sheet which is placed in upright position. Coating is sprayed in one layer; the thickness of layer is 0.3 to 0.6 mm. If a thicker layer of coating is required, the spraying is repeated (particularly preferably after 1-5 min). The total thickness of spray applied coating preferably lies within the range of 0.3 to 3 mm (preferably 0.5 to 2 mm). Coatings may be also applied on sealing constructions. The preferred temperature of metal surface should not be lower than 10 °C (preferably 20-40 °C). The method according to the present invention provides very fast curing of these spray applied coatings (gel time 15-40 s, tack free time 25-120 s) and wherewith the dripping of spray applied mixture does not occur (Table 4).

The mechanical properties of spray applied coatings were tested after 7 days of curing at room temperature. The mechanical and physical properties are presented in Table 5.

Table 5 Mechanical and physical properties of spray applied polyurethane coatings; the thickness of tested coatings is 0.4-0.6 mm

**Table 5**

| **Properties** | **PU-1** | **PU-2** | **PU-3** | **PU-4** | **PU-5** |
|---|---|---|---|---|---|
| Tensile strength, MPa | 39.3±0. 7 | 25.8±0. 6 | 25.6±0. 6 | 22.2±0.5 | 23.1±0.4 |
| Modulus, MPa | 1269±6 3 | 1054±1 8 | 983±39 | 978±20 | 929±13 |
| Elongation, % | 5.3±0.40 | 5.9±0.90 | 6.4±0.90 | 4.9±0.33 | 5.0±0.70 |
| Hardness, Shore D | 70 | 63 | 64 | 53 | 54 |
| Water absorbance, wt% | 0.52 | 1.20 | 1.73 | 1.63 | 1.45 |
| ASTM 570(48 h, 50°C) | | | | | |

Obtained coatings show high hydrolytic stability. When testing PU-3 coating films for 14 days in distilled water at 100 °C, tensile strength decreased to 57.6 % of their initial value. Coatings have high chemical resistance. When testing PU-3 coating films in 20% H₂SO₄, 5% NaOH and 5% NH₄OH solutions after 80 days of exposure, no significant changes in mechanical properties were observed.

### Industrial applicability

The claimed method allows obtaining low viscosity and in reaction with isocyanate component catalytically active, thixotropic polyol components which do not comprise organometallic compounds.

Spray applied polyurethane coatings have good physical and mechanical properties that meet the requirements that are set for V type 2K polyurethane coatings in the ASTM D16 standard.

Dangling chains C14-C22 present in polyurethane network provide hydrophobic properties and high hydrolytic resistance of coatings which is important for application domain - inside wall coatings of potable water tanks.

## Claims

1. A method for producing spray applied polyurethane coatings on metal constructions by mixing isocyanate and polyol components, whereby firstly catalytically active vegetable oil polyol is synthesized, which is then mixed with chain extender, thixotropic agent, molecular sieves, antifoaming agent and nanoparticles, and the volume ratio of polyol and isocyanate component is 1.0 to 1.0.

2. A method according to claim 1, wherein said catalytically active vegetable oil polyols are synthesized from vegetable oil and triethanolamine with molar ratio of vegetable oil and triethanolamine is 1.0 : 2.0 to 3.0 with following parameters: a) higher fatty acid C14-C22 triethanolamine esters and higher fatty acid monoglycerides in the range of 82 to 90 percentage by mass; b) higher fatty acid C14-C22 diglycerides in the range of 2 to 10 percentage by mass; c) glycerol in the range of 1 to 9 percentage by mass; d) the pH of polyol/water solution is in the range of 8.2 to 9.2.

3. A method according to claim 1, wherein said chain extender is glycol containing primary hydroxyl groups with molecular weight ranging from 62 to 150 selected from the group consisting of ethylene glycol, 1,4-butylene glycol, 1,3-propylene glycol, diethylene glycol, triethylene glycol.

4. A method according to claim 1, wherein said thixotropic agent is selected from the group consisting of N-substituted diethanolamines:
N-Methyldiethanolaimne, N -Ethyldiethanolamine, N-Phenyldiethanolamine, N-Buthyldiethanolamine.

5. A method according to claim 1, wherein said nanoparticles are zinc oxide nanoparticles.

6. A method according to claim 1, wherein said antifoaming agent is polysiloxanes.

7. A method according to claim 1, wherein said isocyanate component is polymeric MDI with isocyanate group content in the range of 30 to 33% and functionality in the range of 2.1 to 3.0.
